# EUROPÄISCHE PATENTSCHRIFT

(11) **EP 1 741 551 B1**
(45) Veröffentlichungstag und Bekanntmachung des Hinweises auf die Patenterteilung: **02.09.2009**
(21) Anmeldenummer: 06013723.9
(22) Anmeldetag: 03.07.2006
(51) Int. Cl.: B32B 11/10, E04D 5/10, D06N 5/00

(54) **Mehrschichtbahn**
Multilayer film
Film multicouche

(30) Priorität: 04.07.2005 DE 102005031433
(43) Veröffentlichungstag der Anmeldung: 10.01.2007
(73) Patentinhaber: MWK Entwicklungs GmbH, 63607 Wächtersbach (DE)
(72) Erfinder: Simonis, Udo, Dr., 63549 Ronneburg (DE)
(74) Vertreter: Stoffregen, Hans-Herbert

(56) Entgegenhaltungen:
- EP-A- 0 704 297
- EP-A- 1 407 878
- DE-A1- 3 503 809
- GB-A- 2 138 357
- US-A- 4 442 148
- US-B1- 6 194 049

## Beschreibung

### Mehrschichtbahn

Die Erfindung bezieht sich auf eine Mehrschicht- wie Dachbahn umfassend eine nichtbitumenverträgliche bzw. durch Bitumen beeinflussbare erste Schicht, die vorzugweise auf PVC-p, einem oder mehreren Polymeren, ausgewählt aus der Gruppe Polyvinylchlorid (PVC), Derivate von Polyvinylchloridverbindungen, Ethylencopolymerisaten wie Ethylen-Vinylacetat-Copolymer (EVA) basiert, und eine mit dieser verbundene gegenüber Bitumen migrationshemmende zweite Schicht (Sperrschicht).

Um insbesondere Gebäudeflächen gegen Witterungseinflüsse zu schützen, werden Bahnen aus Bitumen, Polymerbitumen oder Kunststoff benutzt.

Bei der Sanierung von alten mit Bitumenbahnen abgedichteten Flächen (Flachdach, Ingenieurbau) können nicht bitumenverträgliche Bahnen nicht direkt auf die zu sanierende Altbitumenabdichtung gelegt werden, da es zu Wechselwirkungen zwischen der Kunststoffbahn (oftmals PVC-p-NB) und dem Bitumen in der Art kommt, dass Weichmacher (Monomerweichmacher wie z. B. DINP, DIDP oder lineare Weichmacher) in die Bitumenschicht wandern.

Durch die Migration des Weichmachers versprödet die Dachbahn, sie verliert ihre Flexibilität, ihre Dimensionsstabilität, d. h. sie schrumpft sehr stark aufgrund des Massenverlusts und wird sehr stark empfindlich auf mechanische Belastungen (Literaturverweis: Weichmacherverlust, Bauschäden in Folge Änderung mechanischer Eigenschaften von PVC-Dachbahnen DDH 4/87 ab Seite 34: Kurzbericht einer Forschungsarbeit (Juni 1986), ausgeführt in der Bundesanstalt für Materialprüfung, Berlin).

Aus architektonischen Gründen und um die Aufheizung der Dachfläche möglichst gering zu halten, sind in den letzten Jahren vermehrt hellfarbene Bahnen im Einsatz.

Auch wenn diese Bahnen bitumenverträglich sind, kommt es beim Kontakt mit Bitumen zu Verfärbungen der Oberfläche.

Diese Verfärbungen sind auf Bitumenöle (Fluxöle) zurückzuführen, die durch die Kunststoffbahn auf die Oberfläche wandern und insbesondere das Fügeverhalten verschlechtern können.

Durch eine Arbeit von L. Glück aus dem Jahr 2003 "Einwirkung von Bitumen auf Kunststoff ― Dach ― und Dichtungsbahnen" wurde gezeigt, dass polymerweichgemachte PVC-p-Bahnen sehr beständig sind, in der Praxis aber eine Verfärbung auftritt. Weitere Bahnen auf der Basis EVA, CPE und FPO zeigen im Kontakt mit Bitumen eine Besonderheit und hier insbesondere die Bahnen auf der Basis von FPO. Diese Bahnen nehmen sehr stark die Bitumenöle auf, geben sie aber auch nach Rekonditionierung nicht wieder ab. Durch die hohe Aufnahme der Öle werden die mechanischen Werte beeinflusst. Es kommt zu einem Anquellen. Es ist nicht auszuschließen, dass die Dauerhaftigkeit in Mitleidenschaft gezogen wird.

Seit 1991 sind Kunststoffdach- und dichtungsbahnen mit Selbstklebeschicht auf dem Markt. Als Kaltselbstklebeschicht wird heute noch ein Bitumen-Kautschuk-Harz-Compound verwendet. Monomer weichgemachte und daher nicht migrationsstabile Formulierungen auf der Basis von PVC-p können nicht in direkten Kontakt mit der Kaltselbstklebeschicht kommen, da es zu vorgenannten Wechselwirkungen kommt.

Hellfarbene bitumenverträgliche Bahnen können ebenso nicht mit einer solchen Masse kaltselbstklebend ausgerüstet werden, da es zu den o. g. Verfärbungen bzw. weiteren Wechselwirkungen kommt (bei FPO-Bahnen starke Massenzunahme durch Aufnahme der Bitumenöle).

Um die dunkle bzw, schwarze Farbe von Bitumenbahnen als Sichtfläche zu vermeiden, ist es bekannt, entsprechende Bahnen mit einer Licht- und UV-Strahlen undurchlässigen Abdeckschicht zu versehen, die farbig ausgebildet ist (DE-A-44 03 101). Allerdings hat sich gezeigt, dass die im Bitumen enthaltenen Öle an die Oberfläche der Deckschicht migrieren, so dass eine Fleckenbildung auftritt.

Eine Mebrschichtbahn der eingangs genannten Art ist der EP-A-1 500 493 zu entnehmen. Um die Migration zu unterbinden, ist vorgesehen, dass die Mehrschichtbahn eine nichtmetallische Sperrschicht aufweist, die zwischen einer äußeren Polymerschicht und einer Bitumenschicht verläuft. Dabei kann die nichtmetallische Sperrschicht basierend auf Polymeren ausgewählt aus der Gruppe Polyamid, Ethylenvinylalkohol, Polyester und/oder Gemischen dieser bestehen. Des Weiteren können in einer Schicht Verstärkungsmaterialien vorhanden sein. Bei den Verstärkungsmaterialien kann es sich um Vliese, Gelege, Gewebe und/oder um Kombinationen dieser handeln,

Die DE-A-103 34 714 bezieht sich auf einen bahn- oder bogenförmigen Verbundstoff mit einer Faserschicht sowie einer Schicht einer dampfoffenen Trägerfolie. Die Faserschicht kann unter- und/oder oberseitig eine Metallisierung aufweisen, um elektromagnetische Strahlung zu dämpfen. Der Verbundstoff kann mit einem Schmelz- oder Haftklebstoff beschichtet sein, um eine Verklebung von Verbundstoffen untereinander oder mit einem geeigneten Untergrund zu ermöglichen.

Die DE-A-35 03 809 bezieht sich auf eine Dichtungsbahn, die eine imprägnierte Faserschicht aufweist, um entsprechende Dichtungsbahnen homogen verschweißen zu können.

Eine Folie mit einer dampfdichten und flüssigkeitsundurchlässigen Zwischenschicht ist aus der EP-A-0 704 297 bekannt, um zu vermeiden, dass Öle aus einer Bitumenbahn an die Oberfläche dringen, wodurch sich andernfalls eine unerwünschte Verfärbung ergäbe.

Eine mehrschichtige Dachbahn ist aus der GB-A-2 138 357 bekannt. Eine dieser Schichten kann ein Vlies sein.

Eine aus VLDPE bestehende Zwischenschicht, die Polyvenylfluorid enthalten kann, fmdet sich in einer mehrschichtigen Bahn nach der US-B-6,194,049. Die entsprechende Zwischenschicht ist dampfundurchlässig.

Auch eine Mehrschichtbahn nach der US-A-4,442,148 umfasst eine dampfdichte Sperrschicht, die nicht zwingend eine Zwischenschicht sein muss.

Dampfdichte Schichten eines Folien-Bitumen-Verbunds sind aus der EP-A-1 407 878 bekannt.

Der vorliegenden Erfindung liegt die Aufgabe zu Grunde, eine Mehrschicht- wie Dachbahn der eingangs genannten Art derart weiterzubilden, dass bei gleichzeitiger Erzielung einer hinreichenden Festigkeit eine Migration von Bitumen unterbunden oder weitgehend unterbunden wird, gleichzeitig aber auch verhindert wird, dass Weichmacher oder niedermolekulare Bestandteile von die zweite Schicht begrenzenden Schichten durch die zweite Schicht migrieren können.

Erfindungsgemäß wird die Aufgabe im Wesentlichen dadurch gelöst, dass die zweite Schicht eine insbesondere mit Fluorkunststoff imprägnierte wie getränkte Faserstoffschicht ist.

Erfindungsgemäß wird eine eine hinreichende Festigkeit für die Mehrschichtbahn bietende Faserstoffschicht benutzt, um insbesondere gegenüber Bitumen migrationshemmend zu wirken. Hierzu wird die Faserstoffschicht imprägniert wie getränkt. Somit ist herstellungstechnisch auf einfache Weise die migrationshemmende Sperrschicht herstellbar, die sodann mit der ersten Schicht insbesondere durch Kaschieren verbunden wird.

Bevorzugterweise handelt es sich bei der Faserstoffschicht um ein Vlies, welches zum einen brandhemmend ausgerüstet sein kann, Hier sind die aus der Literatur bekannten Ausrüstungen mit Borsalzen, Glasfasern, Aramidfasern etc. vorstellbar.

Um die Dimensionsstabilität zu gewährleisten, ist ebenso ein Kombinationsgelege einsetzbar, d. h . eine Kombination aus Vlies mit entsprechenden Verstärkungsgelegen oder ―geweben aus Glas oder Polyester. Als Faserstoffschicht kommt auch ein Gewebe, ein Gelege oder ein Gewirk oder aus Kombinationen zumindest einiger dieser in Frage. Insbesondere besteht die Faserstoffschicht aus einem Polyester- oder Polyamid-Vlies.

Als Fluorkunststoff zur Erzielung der Migrationshemmung wird insbesondere Polyvinylidenfluorid (PVDF) oder Polytetrafluorethylen benutzt.

Die erste Schicht sollte insbesondere eine PVC-p-Bahn sein.

Dabei ist aufgrund der mit Fluorkunststoff imprägnierten zweiten Schicht sichergestellt, dass Weichmacher aus der PVC-Schicht durch die Faserstoffschicbt nicht migrieren können. Ist auf der der ersten Schicht gegenüberliegenden Seite der zweiten Schicht eine Schmelzklebstoffschicht angeordnet, können folglich Weichmacher in diese nicht migrieren. Umgekehrt können niedermolekulare Bestandteile der Schmelzklebschicht nicht in die erste Schicht migrieren, wodurch anderenfalls ein Verspröden erfolgen würde.

Als Schmelzklebstoff kommen insbesondere ein Kaltselbstklebstoff in Frage, insbesondere selbstklebende Bitumenmassen, insbesondere Mischungen von Bitumen mit synthetischen Polymeren wie Styrol-Butadien-Styrol-Blockcopolymeren (SBS-Blockcopolymere) oder Styrol-Isopren-Styrol-Blockcopolymeren (SIS-Blockcopolymere). Aber auch Selbsthaftklebstoffe auf der Basis von Butyl, PIB, Acrylat, Polyvinylether und Naturkautschuk sind einsetzbar.

Bevorzugterweise ist die erste Schicht eine witterungs- und insbesondere farbbeständige Polymerschicht wie Farbpolymerschicht.

Ein Vlies bzw, ein Kombinationsverbundwerkstoff aus Vlies und Gelege oder Gewebe zeigt gegenüber literaturbekannten Sperrschichten einen weiteren großen Vorteil. Es behindert nicht die Wasserdampfdiffusion wie z. B. Polyamide, die als Sperrschicht schon in der Vergangenheit eingesetzt wurden.

Vliese zeigen auch im Verbund mit der Kunststoffbahn kein Einkerbungsverhalten.

Durch die Sperrschicht wird das Alterungsverhalten, besser gesagt die Dauerhaftigkeit positiv beeinflusst. Aus umfangreichen Studien ist es bekannt, dass die Bitumenöle in der Bahn oder insbesondere auf der Bahn neben dem Bewitterungsverhalten auch die Alterung insgesamt negativ beeinflussen.

Des Weiteren sollte die Mehrschichtbahn eine feuerhemmende Schicht aufweisen, wobei die zweite Schicht mit einem brandhemmenden Material versehen sein kann. Als brandhemmendes Material kommen insbesondere dem Imprägniermittel beigegebene Additive wie Borsalze oder Glasfasern in Frage.

Die Faserstoffschicht sollte ein Flächengewicht von insbesondere bis 300 g/m², vorzugsweise 50 g/m² bis 200 g/m² aufweisen. Bevorzugte Schichtdicken belaufen sich auf 500 µm bis 1500 µm.

Demgegenüber ist bevorzugterweise vorgesehen, dass die erste Schicht ein Flächengewicht von 1200 g/m² bis 2700 g/m² und/oder eine Dichte von 1,05 g/cm³ bis 1,55 g/cm³ und/oder eine Dicke von 1 µm bis 3 µm aufweist.

Des Weiteren ist die zweite aus Faserstoff bestehende Schicht dadurch charakterisiert, dass diese beim Kaschieren in Längsrichtung form stabil ist.

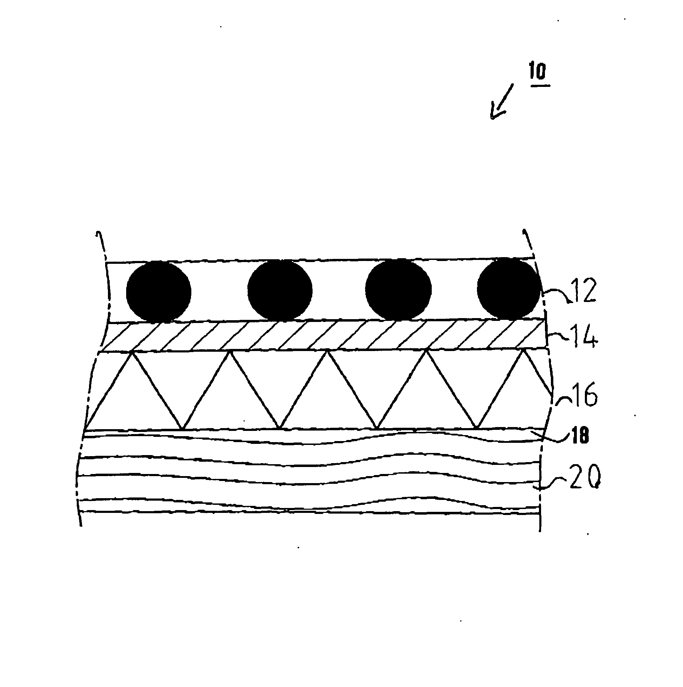

Weitere Einzelheiten, Vorteile und Merkmale der Erfindung ergeben sich nicht nur aus den Ansprüchen, den diesen zu entnehmenden Merkmalen -für sich und/oder in Kombination-, sondern auch aus der nachfolgenden Beschreibung eines der Zeichnung zu entnehmenden Ausführungsbeispiels.

In der einzigen Figur ist eine eine Mehrschichtbahn 10 bildende Schichtanordnung dargestellt, die aus einer Deckschicht oder ersten Schicht 12 besteht, die gegebenenfalls über eine Haftvermittlerschicht 14 mit einer gegenüber Bitumen migrationshemmend wirkenden zweiten Schicht 16 verbunden ist, auf deren Unterseite 18 eine Klebeschicht 20 insbesondere auf Bitumenbasis aufgebracht ist. Dabei kann die erste Schicht 12 auf der zweiten Schicht 16 kaschiert sein.

Ferner kann die erste Schicht 12 auf der Basis von Polyvinylchlorid aufgebaut und gefärbt sein.

Die zweite Schicht 16 besteht aus einem Faserstoff wie Vlies, Gewebe, Gelege und/oder Gewirk, das mit einem eine Migration gegenüber Bitumen verhindernden Material imprägniert wie getränkt ist. Hierbei handelt es sich um wässrigen Fluorkunststoff insbesondere Polyvinylidenfluorid oder Polytetrafluorethylen.

Auf die freie Unterseite 18 der imprägnierten Faserstoffschicht 16 wird sodann eine Schicht aus insbesondere kaltselbstklebendem Material aufgetragen, das auf Bitumen basiert und insbesondere eine Mischung von Bitumen mit synthetischen Polymeren ist. Andere Klebstoffe kommen gleichfalls in Frage.

Aufgrund der erfindungsgemäßen Lehre wird eine Mehrschichtbahn zur Verfügung gestellt, die in ihrer Oberfläche durch Bitumen nicht verändert wird, so dass ein Abdecken von Bitumenbahnen möglich ist. Zusätzlich kann die Mehrschichtbahn feuerhemmend ausgebildet werden, indem insbesondere die zweite Schicht 16 zusätzlich mit einem feuerhemmenden Mittel wie Borsalz imprägniert wird.

## Patentansprüche

1. Mehrschicht- wie Dachbahn (10) umfassend eine nichtbitumenverträgliche bzw. durch Bitumen beeinflussbare erste Schicht (12), die vorzugsweise auf PVC-p, einem oder mehreren Polymeren, ausgewählt aus der Gruppe Polyvinylchlorid (PVC), Derivate von Polyvinylchloridverbindungen, Ethylencopolymerisaten wie Ethylen-Vinylacetat-Copolymer (EVA) basiert, und eine mit dieser verbundene gegenüber Bitumen migrationshemmende zweite Schicht (16),
**dadurch gekennzeichnet,**
**dass** die zweite Schicht (16) eine imprägnierte Faserstoffschicht ist, die mit einem Fluorkunststoff als migrationshemmendes Mittel imprägniert ist.

2. Mehrschicht- wie Dachbahn nach Anspruch 1,
**dadurch gekennzeichnet,**
**dass** die Faserstoffschicht aus einem Vlies, einem Gewebe, einem Gelege, einem Gewirk oder aus Kombinationen zumindest einiger dieser basiert oder daraus besteht.

3. Mehrschicht- wie Dachbahn nach Anspruch 1 oder 2,
**dadurch gekennzeichnet,**
**dass** die Faserstoffschicht aus einem Polyester- oder Polyamid-Vlies besteht.

4. Mehrschicht- wie Dachbahn nach zumindest einem der vorhergehenden Ansprüche,
**dadurch gekennzeichnet,**
**dass** das migrationshemmende Mittel Polyvinylidenfluorid (PVDF) oder Polytetrafluorethylen imprägniert wie getränkt ist.

5. Mehrschicht- wie Dachbahn nach zumindest einem der vorhergehenden Ansprüche,
**dadurch gekennzeichnet,**
**dass** die erste Schicht (12) eine PVC-p-Bahn ist.

6. Mehrschicht- wie Dachbahn nach zumindest einem der vorhergehenden Ansprüche,
**dadurch gekennzeichnet,**
**dass** die erste Schicht (12) eine witterungs- und farbbeständige Polymerschicht wie Farbpolymerschicht ist.

7. Mehrschicht- wie Dachbahn nach zumindest einem der vorhergehenden Ansprüche,
**dadurch gekennzeichnet,**
**dass** die Mehrschichtbahn (10) eine gegenüberliegend zu der ersten Schicht (12) verlaufende und mit dieser direkt oder indirekt verbundene dritte Schicht (18) umfasst, die auf einem Schmelzklebstoff basiert.

8. Mehrschicht- wie Dachbahn nach zumindest einem der vorhergehenden Ansprüche,
**dadurch gekennzeichnet,**
**dass** der Selbstklebstoff eine kaltselbstklebende Bitumenmasse, insbesondere Mischungen von Bitumen mit synthetischen Polymeren wie Styrol-Butadien-Styrol-Blockcopolymeren (SBS-Blockcopolymere) oder Styrol-Isopren-Styrol-Blockcopolymeren (SIS-Blockcopolymere) ist.

9. Mehrschicht- wie Dachbahn nach zumindest einem der vorhergehenden Ansprüchen,
**dadurch gekennzeichnet,**
**dass** die Mehrschichtbahn (10) eine feuerhemmende Schicht aufweist.

10. Mehrschicht- wie Dachbahn nach zumindest einem der vorhergehenden Ansprüche,
**dadurch gekennzeichnet,**
**dass** die zweite Schicht (16) der Mehrschichtbahn (10) mit einem brandhemmenden Material versehen ist, das vorzugsweise auf Borsalz basiert.

## Claims

1. Multi-layer sheet such as a roofing sheet (10) comprising a first layer (12) which is non-bitumen-compatible or influenceable by bitumen and preferably based on PVC-p, one or more polymers selected from the group of polyvinyl chloride (PVC), derivatives of polyvinyl chloride compounds, ethylene copolymerisates such as ethylene vinyl acetate copolymer (EVA), and a second layer (16) bonded thereto and migration-inhibiting for bitumen,
**wherein**
the second layer (16) is an impregnated fiber material layer impregnated with a fluoroplastic as a migration-inhibiting agent.

2. Multi-layer sheet such as a roofing sheet according to Claim 1,
**wherein**
the fiber material layer is based on or comprises a nonwoven, woven, scrim or knitted fabric or a combination of at least some of these.

3. Multi-layer sheet such as a roofing sheet according to Claim 1 or 2,
**wherein**
the fiber material layer comprises a polyester or polyamide nonwoven fabric.

4. Multi-layer sheet such as a roofing sheet according to at least one of the previous claims,
**wherein**
the migration-inhibiting agent polyvinylidene fluoride (PVDF) or polytetrafluoroethylene is impregnated, for example saturated.

5. Multi-layer sheet such as a roofing sheet according to at least one of the previous claims,
**wherein**
the first layer (12) is a PVC-p sheet.

6. Multi-layer sheet such as a roofing sheet according to at least one of the previous claims,
**wherein**
the first layer (12) is a weathering-resistant and colour-fast polymer layer such as a coloured polymer layer.

7. Multi-layer sheet such as a roofing sheet according to at least one of the previous claims,
**wherein**
the multi-layer sheet (10) comprises a third layer (18) running opposite to the first layer (12), bonded directly or indirectly thereto and based on a hot-melt adhesive.

8. Multi-layer sheet such as a roofing sheet according to at least one of the previous claims,
**wherein**
the self-adhesive is a cold self-adhesive bitumen compound, in particular mixtures of bitumen with synthetic polymers such as styrene-butadienestyrene block copolymers (SBS block copolymers) or styrene-isoprene-styrene block copolymers (SIS block copolymers).

9. Multi-layer sheet such as a roofing sheet according to at least one of the previous claims,
**wherein**
the multi-layer sheet (10) has a fire-retardant layer.

10. Multi-layer sheet such as a roofing sheet according to at least one of the previous claims,
**wherein**
the second layer (16) of the multi-layer sheet (10) is provided with a fire-retardant material preferably based on boron salt.

## Revendications

1. Bande multicouche telle que bande de couverture (10) comprenant une première couche (12) incompatible avec le bitume ou susceptible d'être modifiée par le bitume, de préférence à base de PVC-p, d'un ou de plusieurs polymères sélectionné(s) dans le groupe chlorure de polyvinyle (PVC), de dérivés de combinaisons de chlorures de polyvinyle, de copolymères d'éthylène tels que le copolymère éthylène-acétate de vinyle (EVA), et une deuxième couche (16) reliée à la première et inhibitrice de migration du bitume,
**caractérisée en ce**
**que** la deuxième couche (16) est une couche fibreuse imprégnée d'une matière synthétique fluorée servant d'agent inhibiteur de migration.

2. Bande multicouche telle que bande de couverture selon la revendication 1,
**caractérisée en ce**
**que** la couche fibreuse est constituée d'un non-tissé, d'un tissu, d'une nappe, d'un matériau à mailles ou est à base d'une combinaison d'au moins certains d'entre eux.

3. Bande multicouche telle que bande de couverture selon la revendication 1 ou 2,
**caractérisée en ce**
**que** la couche fibreuse est constituée d'un non-tissé en polyester ou polyamide.

4. Bande multicouche telle que bande de couverture selon au moins l'une des revendications précédentes,
**caractérisée en ce**
**que** l'agent inhibiteur de migration est imprégné, par exemple imbibé, de polyvinylidènefluorure (PVDF) ou de polytétrafluoréthylène.

5. Bande multicouche telle que bande de couverture selon au moins l'une des revendications précédentes,
**caractérisée en ce**
**que** la première couche (12) est une bande de PVC-p.

6. Bande multicouche telle que bande de couverture selon au moins l'une des revendications précédentes,
**caractérisée en ce**
**que** la première couche (12) est une couche de polymère résistant aux intempéries et à la décoloration, par exemple une couche de polymère pigmenté.

7. Bande multicouche telle que bande de couverture selon au moins l'une des revendications précédentes,
**caractérisée en ce**
**que** la bande multicouche (10) comprend une troisième couche (18) à base de colle fusible qui est opposée à la première couche (12) et reliée directement ou indirectement à cette dernière.

8. Bande multicouche telle que bande de couverture selon au moins l'une des revendications précédentes,
**caractérisée en ce**
**que** la colle autoadhésive est une masse bitumeuse adhésive à froid, en particulier un mélange de bitumes avec des polymères synthétiques tels qu'un copolymérisat en masse styrène-butadiène-styrène (copolymère en masse SBS) ou un copolymérisat en masse styrène-isoprène-styrène (copolymère en masse SIS).

9. Bande multicouche telle que bande de couverture selon au moins l'une des revendications précédentes,
**caractérisée en ce**
**que** la bande multicouche (10) présente une couche ininflammable.

10. Bande multicouche telle que bande de couverture selon au moins l'une des revendications précédentes,
**caractérisée en ce**
**que** la deuxième couche (16) de la bande multicouche (10) est munie d'un matériau ignifuge, de préférence à base de sel de bore.
